(19) Europäisches Patentamt

European Patent Office

Office européen des brevets

(11) **EP 1 418 724 A1**

(12) **DEMANDE DE BREVET EUROPEEN**

(43) Date de publication:
**12.05.2004 Bulletin 2004/20**

(51) Int Cl.⁷: **H04L 27/38**

(21) Numéro de dépôt: **03104115.5**

(22) Date de dépôt: **07.11.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **08.11.2002 FR 0214056**

(71) Demandeur: **Thales**
**92200 Neuilly Sur Seine (FR)**

(72) Inventeurs:
• **Eudes, Jacques, c/o Thales Intellectual Property**
**94117 Arcueil (FR)**
• **Demeure, Cédric,**
**c/o Thales Intellectual Property**
**94117 Arcueil (FR)**

(74) Mandataire: **Dudouit, Isabelle**
**THALES Intellectual Property,**
**31-33 avenue Aristide Briand**
**94117 Arcueil Cedex (FR)**

(54) **Procédé et modem pour la synchronisation et la poursuite de phase**

(57) Procédé et dispositif pour démoduler un signal dans un système de communications par paquet, le signal comportant au moins un burst représentatif des échantillons de données relatives à un ou plusieurs utilisateurs. Il comporte au moins une étape d'estimation et de poursuite de la phase pendant au moins la durée du burst en utilisant un test d'hypothèse de fréquence.

FIG.3

**Description**

La présente invention concerne un dispositif et un procédé permettant la synchronisation et la poursuite de phase dans le cas des transmissions.

L'invention s'applique notamment pour des transmissions par paquets de taille réduite en télécommunications par satellite, pour des liaisons radio sans fils pour des applications sol, pour des communications de type faisceaux hertziens ,...

Le procédé selon l'invention s'applique par exemple dans tout type de communications par paquet (TDMA (Time division multiple access), évasion de fréquence, bursts,...) pour des applications radio diverses (faisceaux hertziens, transmissions par satellite, liaisons courte portée en millimétrique).

Il vise notamment les terminaux de petites tailles et donc des débits très faibles.

Il s'applique pour toute constellation, par exemple, de type M-QAM, M-PSK et APSK.

Le problème de la synchronisation en mode burst d'un modem est toujours délicat. Les procédés classiques consistent à insérer un « préambule » formé de symboles connus du récepteur sur lesquels il réalise une corrélation qui permet la détection lors du franchissement d'un seuil. Ces symboles réduisent l'efficacité de la transmission car ils ne contiennent pas d'informations utiles. Il s'avère donc souhaitable de limiter au maximum leur nombre.

L'utilisation, par exemple des turbo-codes, ou les récents développements en codage correcteur d'erreur, ont amplifié ce problème. En effet, ces nouveaux codes permettent de réduire fortement le point de fonctionnement des codes correcteurs d'erreur, ce qui implique que la synchronisation du modem doit fonctionner dans des conditions plus difficiles (rapport Signal à Bruit ou SNR, Signal to Noise Ratio, plus faible).

En transmission par satellite comme en faisceaux hertziens, le problème est d'autant plus crucial que la propagation est bonne (pas de problème de multitrajets en particulier, ni de fading). On peut ainsi espérer atteindre un point de fonctionnement du type Eb/N0 (c'est à dire le rapport entre l'énergie transmise par bit utile et la densité spectrale de bruit) égal à 2 ou 3 dB, soit un C/N0 voisin de 0 dB (carrier/noise en BPSK).

Pour résoudre ce problème, on effectue une estimation au sens du maximum de vraisemblance de la séquence de référence cherchée.

Une autre solution consiste à utiliser la protection amenée par le code correcteur d'erreur pour rendre le procédé plus robuste en bénéficiant du gain de traitement résultant du code correcteur d'erreur. C'est la solution retenue dans la thèse de C.Morlet [1] « Démodulateur embarqué multiporteur pour service multimédia par satellite ENST, réf. 000E27 obtenue en septembre 2000 » et dénommée Tentative Décision. Cette solution présente toutefois trois inconvénients majeurs :

o   La synchronisation dépend du code employé et lie donc ces deux parties du modem qui sont en général indépendantes,

o   Le procédé n'est pas très robuste aux erreurs de fréquence,

o   S'il est bien adapté lors de l'utilisation de forme d'onde convolutionnel classique, le procédé est plus délicat et plus difficile à utiliser lors de son emploi avec des formes d'ondes utilisant des Turbo-codes. Les turbo-codes fonctionnant par itération, il faut effectuer plusieurs itérations pour obtenir un taux d'erreur en sortie suffisamment bas pour aider la synchronisation dans la boucle de retour. Cela implique en pratique un coût de calcul important (de fait on se limite à une demie ou une itération) et également un délai de traitement important, ce qui peut être rédhibitoire en terme de latence.

Les transmissions burst par satellite sont aussi largement employées pour des petites stations qui, du fait de la puissance et de la taille d'antenne utilisée, n'ont accès en terme de bilan de liaison qu'à des débits faibles. Ceci les rend plus sensibles aux erreurs de fréquence. En effet, plus la fréquence porteuse est élevée, plus l'erreur générée par les VCO utilisés (Voltage Control Oscillator) est grande. Par exemple, pour une fréquence porteuse de 10 GHz, un débit de 64 kBits/s, une valeur $\Delta F*Ts$ égale à $10^{-3}$, où $\Delta F$ correspond à l'erreur en fréquence (différence entre la fréquence du signal et la fréquence théorique) et Ts à la durée d'un symbole, la précision est de $dt/t=10^{-8}$. Ceci est beaucoup trop pour un pilote de taille et de prix compatibles aux terminaux grand public. La solution consistant à utiliser un pilote de haute stabilité n'est pas acceptable d'un point de vue économique dans ce type de terminaux.

Le brevet US 5 170 415 décrit un procédé où la séquence d'apprentissage en début de burst sert d'une part à acquérir la synchronisation temporelle et d'autre part à obtenir la synchronisation de phase.

La demande de brevet US 2001/0017897 divulgue une méthode qui utilise une pondération de phase inversement proportionnelle à l'amplitude pour accélérer la convergence de la boucle de phase en présence de jitter de phase.

L'objet de la présente invention concerne notamment un procédé et un dispositif qui utilisent une ou plusieurs hypothèses en écart de fréquence et une information de qualité du symbole dans la boucle de phase.

L'invention concerne un procédé pour démoduler un signal dans un système de communications par paquet, le signal comportant au moins un burst représentatif des échantillons de données relatives à un ou plusieurs utilisateurs. Il est caractérisé en ce qu'il comporte au moins une étape d'estimation et de poursuite de la phase pendant au moins la durée du burst en utilisant un test d'hypothèse de fréquence.

Le procédé peut comporter les étapes suivantes :

1. pour un échantillon k du signal reçu,
2. générer un signal de correction et de poursuite Scp(i) (par un NCO par exemple) en utilisant une valeur d'écart de fréquence i$\Delta$F et une valeur de phase d$\varphi$,
3. corriger le signal d'entrée Dk en le multipliant par le signal de correction Scp(i)
4. transmettre le signal corrigé en fréquence et en phase,
5. à une étape de décision, et
6. à une étape de calcul de la phase résiduelle d$\varphi$,
7. utiliser le signal décidé et le signal corrigé pour estimer la valeur SNR(i) pour l'écart de fréquence indicé i,
8. intégrer la valeur de la phase résiduelle d$\varphi$ et la transmettre à l'étape 2 de génération de signal de correction et de poursuite,
9. faire varier la valeur de i, réitérer les étapes 1 à 8,
10. pour chaque hypothèse faire la somme de SNR locaux par échantillon,
11. faire varier la valeur de k, réitérer les étapes 1 à 9,
12. extraire la valeur en fréquence indice i pour laquelle la valeur du SNR est optimale.

L'invention concerne aussi un dispositif pour démoduler un signal dans un système de communications par paquet, le signal comportant au moins un burst représentatif des échantillons de données relatives à un ou plusieurs utilisateurs caractérisé en ce qu'il comporte des moyens pour mettre en oeuvre le procédé caractérisé ci-dessus.

Le procédé selon l'invention présente par exemple les avantages suivants :

- Il utilise des symboles de référence en nombre minimal,
- Il résiste aux erreurs en fréquence en utilisant des hypothèses d'erreur multiples en fréquence,
- Il est utilisable pour différents types de constellation et pour tout type de communications par paquet (TDMA, évasion de fréquence, etc.) ou pour des applications radio diverses,
- Il propose une démodulation rapide et efficace notamment pour des transmissions par paquets de taille réduite en télécommunications par satellite.

D'autres avantages et caractéristiques de la présente invention apparaîtront mieux à la lecture de la description qui suit, donnée à titre illustratif et nullement limitatif, annexée des figures qui représentent :

- La figure 1 le contenu d'une trame TDMA,
- La figure 2 la trame de la figure 1 dans laquelle est inséré un UW (mot unique) dans le burst,
- La figure 3 un exemple d'architecture d'un démodulateur selon l'invention,
- La figure 4a un synoptique de la poursuite de phase pour l'hypothèse de fréquence i$\Delta$F,
- La figure 4b une variante de réalisation d'architecture pour laquelle le décodeur est situé avant l'étape d'estimation du SNR,
- La figure 5 la géométrie pour une constellation 4-QAM à 4 états,
- La figure 6 une constellation 16-QAM à 16 états,
- La figure 7 un exemple de pondération de la phase pour une constellation 4-QAM,
- Les figures 8 à 13 des résultats obtenus par la mise en oeuvre du procédé.

De manière à mieux faire comprendre le procédé et le démodulateur (modem) selon l'invention, la description qui suit est donnée à titre illustratif et nullement limitatif pour une constellation de type M-QAM.

Avant de détailler un exemple de mise en oeuvre du dispositif et du procédé selon l'invention, quelques rappels relatifs à la forme d'onde sont exposés.

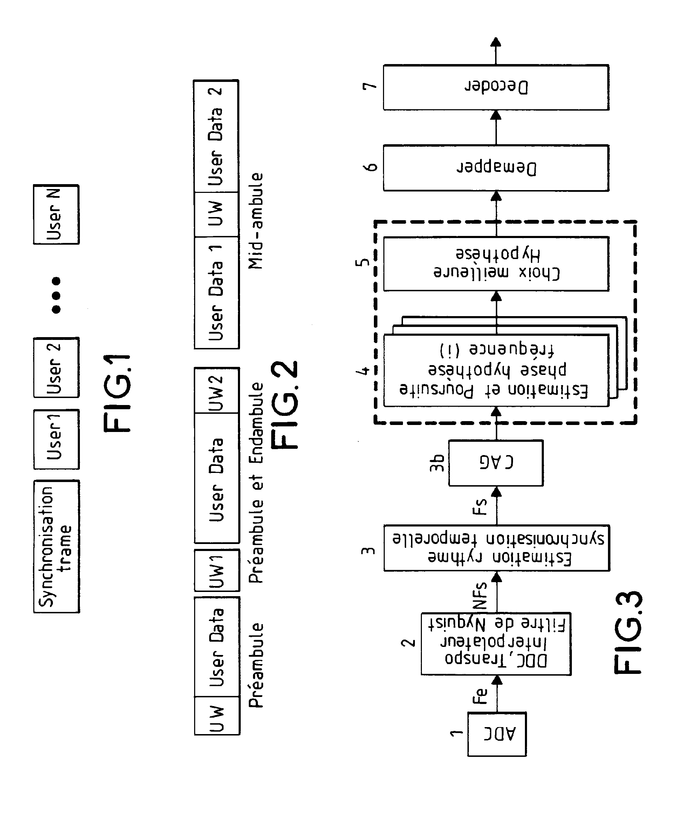

La figure 1 décrit le contenu d'une trame, comprenant les bursts de plusieurs utilisateurs, employée dans les communications multi-utilisateurs par paquet utilisant le procédé TDMA (Time Division Multiple Access) d'accès par partage temporel de la ressource (bande de fréquence-canal utilisé).

La trame comporte par exemple une partie dédiée pour la synchronisation de la trame et plusieurs parties relatives aux données des utilisateurs.

Les bursts $U_1$, $U_2$, ...$U_N$ envoyés par chaque utilisateur contiennent alors deux parties : les symboles utiles qui contiennent les bits à transmettre et un certain nombre de symboles regroupés dans ce qui est appelé un mot unique, en abrégé UW (Unique Word), connu du récepteur et qui lui permet de se synchroniser. La façon de répartir des symboles dans un burst quelconque peut être réalisée de différentes manières selon les conditions de définition de la forme d'onde (service, débit, durée du burst, efficacité et robustesse visées, latence, etc.).

La figure 2 montre trois exemples d'insertion d'un mot unique UW dans un burst. La position de l'UW dans le burst peut être dictée par différentes considérations, par exemple :

- Au début du burst, ceci permet de traiter rapidement le reste du burst et de ce fait de limiter la latence due au traitement,
- Au milieu du burst, ceci permet de limiter la dérive en temps et en fréquence en divisant par deux la durée possible de dérive (dans ce cas, on traite le début du burst en remontant le temps à partir du milieu du burst),
- Au début et à la fin du burst, cela permet également de limiter la durée de dérive,
- La répartition début-milieu-fin permet de gagner un facteur quatre sur la dérive en question.

Le mot unique peut aussi être uniformément réparti dans le burst.

Dans une forme d'onde capable de transmettre des débits très variés, par exemple en élargissant la bande de fréquence utilisée tout en gardant la durée de burst constante afin de simplifier la gestion TDMA globale, il est difficile de garantir le même point de fonctionnement en fonction du débit. Par exemple, si le débit varie de 64 kbits/s jusqu'à 2 Mbits/s, il est nécessaire de définir un mot unique UW qui permet de travailler sur N symboles et sur 32N symboles si on veut garder constante la proportion de symboles de référence dans le burst.

En pratique, on aura tendance à limiter au maximum la taille de l'UW de manière à optimiser le débit. La tendance est donc de définir un mot unique UW qui va dépendre de la constellation utilisée, celle-ci imposant le point de fonctionnement.

Par exemple, en QPSK (Quadrature Phase Shift Keying), 16 symboles suffisent pour une modulation codée ½ avec un C/N (Carrier Noise) de 3 dB.

La figure 3 schématise (globalement) un exemple d'architecture pour un démodulateur permettant d'exécuter les étapes du procédé selon l'invention. Il peut se placer derrière un estimateur de rythme, le procédé fonctionne à un échantillon par symbole. Un dispositif de régulation de niveau (CAG ou commande automatique de gain) est utilisé. Il fonctionne palier par palier en « feed-forward » en même temps que l'estimation de rythme (ou juste derrière).

Le signal reçu par le démodulateur est supposé échantillonné à une fréquence intermédiaire au rythme Fe (la valeur de Fe est choisie selon des critères d'échantillonnage habituels) par un Convertisseur Analogique-Numérique 1. Le signal échantillonné est ensuite transposé en bande de base et sous-échantillonné après filtrage de Nyquist adapté au rythme de la modulation reçue, 2. Dans le cas d'un échantillonnage en I,Q la transposition en bande de base est supprimée. Un interpolateur suivi d'un filtre de Nyquist permet de donner à l'algorithme d'estimation du rythme un train d'échantillons sur-échantillonné par rapport au rythme symbole Fs d'un facteur N (typiquement 3 ou 4).

Le signal NFs est ensuite transmis à un dispositif 3 permettant une estimation rythme et une synchronisation temporelle. L'algorithme de synchronisation rythme 3 est couplé à la synchronisation temporelle ce qui permet de localiser le symbole de début de burst. Il est par exemple basé sur l'algorithme de Meyer utilisé en « feed-forward ». Le principe est décrit par exemple dans la référence de Oerder et Meyr, « Digital filter and Square Timing Recovery », publiée dans la revue IEEE transactions on communications, Vol.36, Mai 1988. Le principe de cet algorithme est de suivre la variation de l'énergie du signal reçu, qui est périodique de période Ts (le temps symbole) et qui est maximale à l'instant optimal d'échantillonnage (ouverture maximale de l'oeil de la modulation). La recherche est par exemple effectuée par calcul de la DFT (Discret Fourier Transform : coefficient de fourrier, ici à la fréquence symbolique) du module du signal (l'énergie) sur une durée égale à un symbole. La phase de la DFT de l'énergie mesure le retard sur le signal. Le début du burst est ensuite détecté par corrélation avec le mot unique l'UW. Cette corrélation permet également de lever l'ambiguïté de phase due à la modulation. Le signal résultant est noté Fs.

Ce signal Fs est transmis à un contrôle automatique de gain CAG 3b servant notamment à réguler le niveau moyen du signal. En pratique, ce CAG est souvent incorporé dans le bloc 3 d'estimation de rythme et de synchronisation temporelle. Une fonction de détection basée par exemple sur le signal de puissance normalisé est réalisée.

Le signal issu du CAG (le signal est composé d'échantillons à Fe qui ont été ramenés à Fs, c'est à dire un échantillon par symbole) est ensuite transmis à une partie récupération phase/fréquence 4, 5 du démodulateur. Le fonctionnement de cette partie consiste notamment à associer deux techniques de démodulation :

- Des tests en fréquence, discriminés par une estimation du SNR en sortie de démodulation (ou de manière équivalente l'erreur moyenne). Le SNR est calculé par exemple à partir d'une décision sur les symboles reçus basée sur une estimation de la phase, bloc 4,
- L'estimation et le suivi de la phase, pondérée par la qualité du symbole reçu, bloc 5.

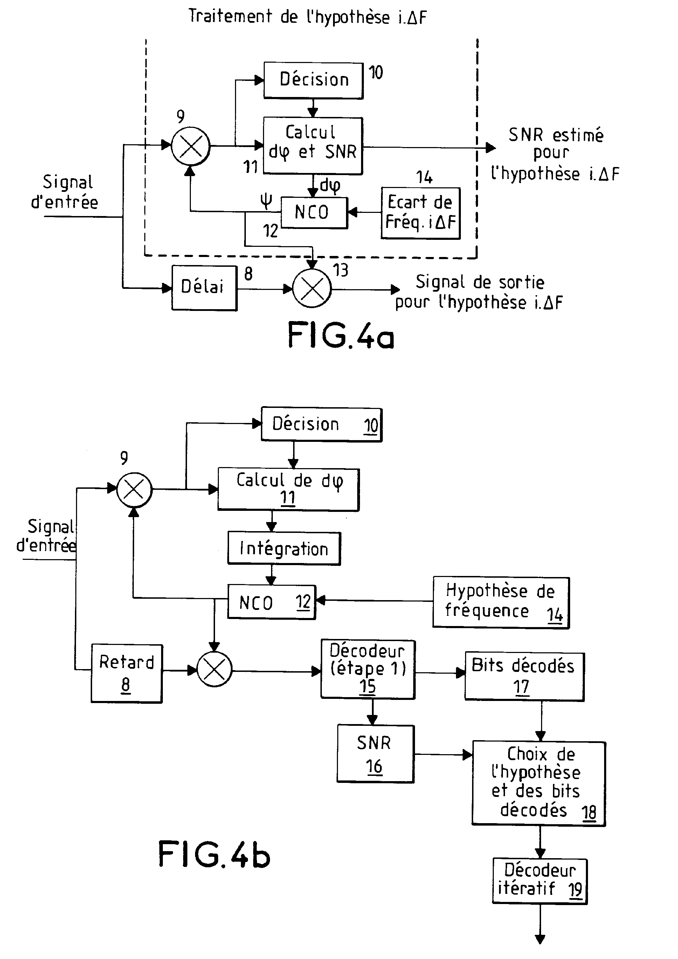

Le bloc 4 est détaillé à la figure 4a.

Le signal corrigé en phase est ensuite transmis à un de-mapper 6 qui permet la transformation du signal complexe en bit pondéré prenant en compte la constellation utilisée, puis à un décodeur 7 en sortie duquel on obtient un signal décodé.

L'utilisation de la partie récupération phase/fréquence permet avantageusement d'augmenter la bande de boucle de la récupération de phase.

Le fonctionnement de la partie récupération phase/fréquence 4,5 se décompose par exemple en 3 étapes :

- Une poursuite de la phase pour plusieurs hypothèses d'écart de fréquence égal à i$\Delta$F, avec i = -N, ...,0,....N. A partir de cette poursuite, une estimation du SNR est effectuée pour chaque hypothèse d'écart en fréquence. Cette étape est décrite par exemple en relation à la figure 4a.
- Le choix de la meilleure fréquence (hypothèse) Fopti est effectué en retenant l'hypothèse d'écart qui maximise le SNR.
- La correction de l'écart de fréquence choisi et de phase sur le signal reçu pour pouvoir effectuer la démodulation. Cette dernière étape peut être réalisée de différentes façons.

Le bloc 4/5 selon l'invention comporte par exemple (figure 4a) : un multiplieur 9 qui reçoit le signal reçu par le démodulateur et un signal de correction de fréquence et de poursuite généré par un NCO (Numeric Control Oscillator) 12 commandé par une valeur d'écart de fréquence i$\Delta$F stockée par exemple dans une mémoire non représentée. Un bloc de décision 10 reçoit le signal corrigé et génère un signal décidé transmis à un dispositif de calcul de SNR et à un dispositif de calcul 11 de phase résiduelle d$\varphi$ recevant le signal corrigé et lui-même relié à un intégrateur. Le NCO peut aussi comporter une fonction de mémorisation, dans la variante par exemple qui utilise les valeurs de phase initiale et de phase finale, décrite ci-après.

Selon une variante de réalisation, le dispositif comporte une ligne de retard 8 qui reçoit le signal reçu par le démodulateur et un multiplieur 13 ayant notamment pour fonction de mélanger le signal retardé avec le signal corrigé en fréquence et en phase issu du NCO. En sortie du mélangeur 13, on a le signal corrigé pour l'hypothèse i$\Delta$F (hypothèse sélectionnée concernant la valeur de fréquence optimale).

Selon une autre variante de réalisation donnée à la figure 4b, le signal corrigé est transmis directement à un décodeur 15 produisant un signal décodé qui va être transmis au dispositif d'estimation de SNR 16. Les autres éléments du dispositif sont identiques à ceux donnés à la figure 4a. Le décodeur permet d'estimer le taux d'erreurs entrant, et il est très sensible aux sauts de phases qui se produisent pour les mauvaises hypothèses de fréquences. Le cas du décodeur itératif 19 est intéressant car seule la première demi itération du décodeur itératif est faite pour les différentes hypothèses fréquentielles, réduisant le surcoût de décodage. Par ailleurs, une décision dure est suffisante pour ce décodage, simplifiant beaucoup la complexité du décodage qui ne nécessite plus la sortie SISO, partie la plus onéreuse du décodage.

Le procédé selon l'invention peut comporter les étapes suivantes :

Pour un échantillon k du signal reçu, Dk et Rk correspondant à l'échantillon d'indice k,

1. générer un signal de correction et de poursuite Scp(i,k) par un NCO (oscillateur contrôlé numériquement) en utilisant une valeur d'écart de fréquence i.$\Delta$F et une valeur de phase d$\varphi$. Pour le premier passage dans la boucle la valeur d'initialisation de la phase résiduelle peut être choisie selon l'une des deux possibilités suivantes :

a) on fait une passe directe, la phase du mot unique permet d'initialiser cette valeur,
b) on fait une passe arrière avant, comme décrit ci-après, l'initialisation n'a alors pas d'importance.

2. corriger le signal d'entrée Rk (correspondant au signal k échantillonné au rythme symbole) reçu par le démodulateur en le multipliant (par exemple au niveau du multiplieur 9) par le signal de correction Scp(i,k),
3. transmettre à une étape de décision le signal corrigé en fréquence Scor(i,k) et aussi au bloc de calcul de la phase résiduelle d$\varphi$(i,k). Le bloc de décision produit un signal décidé Di,k qui est utilisé avec le signal corrigé Scor pour estimer la valeur de SNR(i,k) pour l'hypothèse d'écart d'indice i. Mémoriser les couples de valeurs SNR(i,k),
4. intégrer la valeur de d$\varphi$(i,k) obtenue à l'aide du signal corrigé et du signal décidé et la transmettre au NCO. La phase résiduelle est utilisée pour corriger de manière locale la génération de phase NCO,
5. faire varier la valeur d'écart en fréquence i=i+1, tant que les valeurs limites n'ont pas été atteintes. Le nombre de valeurs prises par i varie par exemple entre -N et +N. Le nombre N est choisi par rapport à la fréquence tolérable en entrée du démodulateur,
6. à la fin de ces étapes le procédé est en possession d'un tableau de valeurs SNR(i,k) pour un échantillon donné,

7. réitérer ces étapes sur tous les échantillons k du signal reçu. A l'issue de cette étape, le procédé dispose d'un tableau comprenant les valeurs des SNR intégrées pour chaque échantillon dont il déduit le meilleur SNR en l'intégrant sur la totalité des bursts. Ceci conduit au choix de l'indice i correspondant à la meilleure fréquence Fopti.

Pour chaque hypothèse fréquentielle, le procédé fait la somme des SNR par échantillon (on somme sur les SNR locaux) hypothèse par hypothèse. Le terme de meilleur SNR s'applique au SNR estimé sur le paquet, c'est-à-dire lorsque l'on a sommé hypothèse par hypothèse les SNR de tous les échantillons.

Le signal reçu par le démodulateur et échantillonné au rythme symbole est corrigé en fréquence (pour chaque échantillon par exemple de la partie contenant les données utilisateurs) par multiplication dans un multiplieur 9 avec un signal de correction et de poursuite généré par un NCO 12 (Numerical Control Oscillateur). Le NCO 12 est commandé par une valeur d'écart en fréquence i.$\Delta$F 14, qui est ensuite multiplié au signal entrant par un multiplieur (9).
Ces opérations de décision et d'estimation du SNR sont détaillées plus loin dans la description.

Opération de décision et de Calcul de la phase

La phase résiduelle $d\varphi(i,k)$ doit être estimée pour pouvoir effectuer la poursuite (on se situe après la phase d'accrochage). Elle est calculée comme l'erreur de phase $d\varphi$ entre le signal reçu Rk corrigé de la phase $\psi_{(i,k)}$ estimée (phase du NCO) et le symbole décidé de la constellation $D_{(i,k)}$, signal décidé issu du bloc de décision, soit :

$$\sin (d\varphi_{(i,k)}=(Rk^{\wedge}D_{(i,k)}) / (|Rk| \cdot |D_{(i,k)}|)) \tag{1}$$

Où $|Rk|$, $|D_{(i,k)}|$ désignent respectivement l'amplitude des variables Rk, $D_{(i,k)}$, et où $Rk^{\wedge}D_{(i,k)}$ désigne le produit vectoriel entre Rk et $D_{(i,k)}$ soit donc de manière équivalente, le déterminant de Rk et $D_{(i,k)}$ c'est à dire $X_A.Y_B-Y_A.X_B$, avec Rk= $X_A$ +i. $Y_A$ et Dk= $X_B$ +i. $Y_B$, les coordonnées x, y correspondent aux coordonnées de la figure.
Pour les petits angles $d\varphi_{(i,k)}$, ce qui est le cas pour la bonne hypothèse d'écart de fréquence i, on peut supposer que les modules de Rk et $D_{(i,k)}$ sont proches de l'unité (en effet $D_{(i,k)}$ est de module unité par construction et Rk a un module proche de l'unité grâce au CAG référencé 3b sur la figure et choisir Sin $(d(\varphi)\approx d(\varphi \approx (Rk^{\wedge}D_{(i,k)})$.

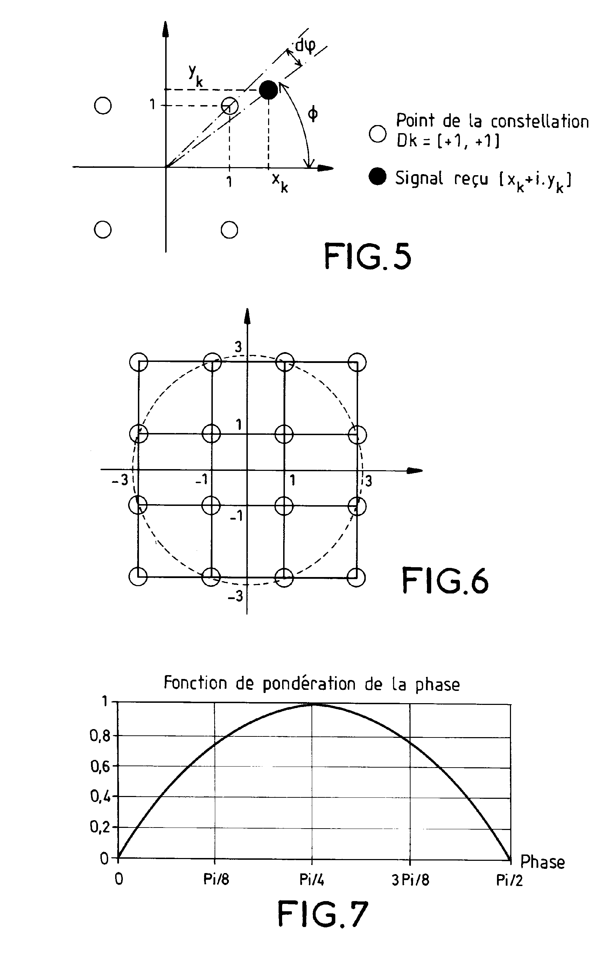

La figure 5 explicite ce calcul dans le cas simple de la constellation 4-QAM.
Dans le cas plus général de la m-QAM (avec m=$2^q$) où les parties réelles et imaginaires des points de la constellation prennent les valeurs $[-(2^{q/2}-1), ....,- 1, 1, ... 2^{q/2}-1])$ le circuit de décision 10 et les valeurs décidées $(X_{Dk},Y_{Dk})$ sont simples et entières, le calcul de $d\varphi_{(i,k)}$ est donc simple, et le gain de boucle G tient compte de la moyenne de la grandeur $1/|Dk|$. Une constellation à 16 états est donnée sur la figure 6. Dans ce cas, l'amplitude moyenne est égale à $\sqrt{10}$ et le cercle montre que la moitié des points de la constellation ont en fait une amplitude égale à cette amplitude moyenne.
En pratique, la valeur de la phase réinjectée dans la boucle de phase peut être calculée ou tabulée. La tabulation est une solution efficace pour les modulations complexes, lorsque les zones de décision (Voronoï) sont complexes. Une tabulation sur un quart de plan (x>=0, y>=0) est la solution la moins chère pour toutes les constellations possédant une symétrie par rapport aux axes.

Calcul de la phase du NCO

L'erreur de phase $d\varphi_k$ (aussi appelée phase résiduelle) est réinjectée dans la boucle de phase du NCO dans 12 en suivant la relation :

$$\psi_{(i,k1)} = \psi_{(i,k)} + G \cdot F( \phi_k, \rho_k) \cdot d\varphi_{(i,k)} + dF \tag{2}$$

où G est le gain de la boucle, dF correspond à l'incrément de phase induit par l'hypothèse d'écart de fréquence testée i.$\Delta$F et $F(\phi,\rho)$ est la fonction de pondération de la phase résiduelle.
La fonction de pondération $F(\phi,\rho)$ peut être également écrite comme étant une fonction des coordonnées cartésiennes du signal reçu F(x,y). La facilité de la mise en oeuvre du calcul de F détermine quelles sont les coordonnées à utiliser (cartésiennes ou polaire) avec x + i.y = $\rho$ $e^{i\varphi}$. Par la suite, on utilisera de manière indifférente les deux notations. L'utilisation de la pondération est principalement motivée par le fait qu'elle diminue sensiblement le nombre de sauts de phase en sortie du démodulateur.
Le gain de boucle G est réglé de manière à pouvoir permettre un suivi de la variation de phase due à d'autres fluctuations que celle induite par l'erreur de fréquence (dans laquelle les dérives induites par les VCO * sont incluses). Un gain faible est utilisé quand les fluctuations sont faibles et permet une convergence robuste, un gain élevé permet un suivi rapide des fluctuations mais laisse un écart type d'erreur plus important en sortie.

Comme précédemment, on peut tabuler la fonction de pondération. Plus le SNR est élevé, plus la confiance est forte. La tabulation est alors effectuée en prenant en compte une courbe en S de pondération de la phase en fonction de la qualité du signal reçu.

Le SNR utilisé pour cette pondération est celui du seuil auquel le modem doit fonctionner. La taille de la table de pondération (qui peut être une ROM ou une RAM) est typiquement de 6 bits pour X>0 et 6 bits pour Y>0. Cette taille de 6 bits convient pour les modulations jusqu'à 64-QAM. Pour les constellations d'ordre supérieur, l'utilisation de pondération n'est pas nécessaire (car le gain apporté par la pondération de l'erreur de phase est presque inexistant), et le calcul direct détaillé ci dessous se révèle suffisant. Le calcul direct est une solution souvent moins chère, mais qui rend plus compliqué le calcul de la pondération à appliquer sur la phase.

Une valeur proche de la théorie pour les petits signaux en Q-PSK de F(φ,ρ) pour la QPSK est donnée par :

$$F(\phi,\rho) = \rho \cdot \phi \cdot (\pi/2 - \phi) \cdot 16/\pi^2 \qquad (3)$$

avec dφ exprimé en radian. La phase sans erreur est de π/4, on a donc F(π/4,1)=1. L'erreur maximale est atteinte quand la phase vaut 0 ou π/2 auquel cas la fonction est nulle. Cette fonction est donnée sur la courbe ou fonction de pondération de la phase de la figure 7. L'introduction du facteur linéaire p dans la fonction permet de prendre en compte le fait que la phase est de meilleure qualité quand le signal est d'amplitude importante et d'autant moins fiable que son amplitude est faible (on se rapproche de l'amplitude zéro où la phase ne signifie plus grand chose). Bien sûr, ceci ne tient que suite à un contrôle de gain qui ramène l'amplitude moyenne égale à l'unité.

Si l'on exprime plus naturellement (vis à vis de l'implémentation matérielle, et de la sortie $\psi_k$ du NCO) dφ en tour, l'équation (3) devient

$$F(\phi,\rho) = \rho \cdot \phi \cdot ( 1/4 - \phi ) \cdot 64 \qquad (4)$$

Dans le plan cartésien, une approximation plus simple de F(φ,ρ) peut être donnée par la distance à l'axe de décision. En 4-QAM par exemple, la décision est (+/-1, +/-1), la distance à l'axe de décision est abs(x).abs(y) alors que la décision est (sign(x),sign(y)).

L'erreur de phase pondérée φ.dφ vaut alors (x.sign(y)-y.sign(x)).abs(x).abs(y). Ici aussi, un contrôle automatique de gain en réception est supposé utilisé, ce qui a ramené les points de la constellation à une valeur unitaire, de façon à ne pas biaiser le calcul de la bande de boucle.

La distance à l'axe de décision est l'entrée naturelle d'un décodeur correcteur d'erreurs à entrée pondérée. Pour les constellations complexes, cette information doit être générée, le plus souvent par une table donnant les poids des différents bits en fonction du couple (X,Y). On évite alors de la calculer deux fois.

La pondération a naturellement tendance à diminuer (légèrement) le gain de la boucle de phase lorsque le rapport signal à bruit diminue.

Calcul de la qualité - choix de la valeur de fréquence - détermination de la fréquence optimale

Le critère de choix entre les diverses hypothèses d'écart de fréquence (iΔF) est basé sur une minimisation de l'estimation de la qualité du résultat de convergence et de poursuite de la boucle de phase sur la totalité du burst sur les différentes hypothèses d'écart en fréquence. Cette qualité est par exemple évaluée en sommant les distances entre le point de la constellation décidé et le signal courant (ce n'est en réalité qu'une approximation du SNR) :

$$SNR_{(i,k)}=\Sigma_k |R_k-D_{(i,k)}|^2 \qquad (5)$$

k est l'indice temporel (sur les échantillons), i est l'indice fréquentiel (sur les hypothèses fréquentielles) ; Rk le symbole reçu, ne dépend que du temps k, les autres variables dépendent du temps et du passé conditionné par l'hypothèse fréquentielle soit donc la moyenne de l'erreur quadratique pour une hypothèse fréquentielle donnée. La somme est effectuée de manière nominale sur la totalité du burst. S'il y a un problème de latence de traitement, on peut se limiter à une partie du burst tout en sachant que cela dégrade les performances globales de l'estimateur.

Pour la minimisation, un rapide développement conduit à la relation à optimiser

$$SNR = \Sigma\,|Rk|^2 + \Sigma\,|Dk|^2 - 2Re(\Sigma\,Rk.Dk^*), \tag{6}$$

où Dk* est le complexe conjugué de Dk.

Pour une 4-QAM, les deux premiers termes sont indépendants de la phase et de la fréquence, et la minimisation n'a lieu que sur le troisième terme, qui doit donc être maximisé. Comme pour le calcul de la phase, le terme Rk. Dk* est simple à calculer et suffit pour pouvoir prendre une décision sur l'hypothèse d'écart en fréquence. Pour les constellations d'ordre plus élevé, le développement de $\Sigma|Rk-Dk|^2$ n'apporte pas de gain majeur. Dans le cas du recours à une table pour le calcul de l'erreur de phase, la valeur $|Rk-Dk|^2$ peut être lue simultanément.

Parallèlisation des calculs

Un des avantages importants résultant de cette façon de traiter l'estimation et la poursuite phase/fréquence est son adaptation en fonction du débit transmis. En effet, si le débit est élevé, la résistance du démodulateur à l'erreur de phase est forte car l'erreur élémentaire pendant la durée d'un symbole est faible et est facilement suivie et corrigée, avec des hypothèses entre $-N.\Delta F$ et $+N.\Delta F$. Si le débit est réduit d'un facteur 2, deux fois on peut effectuer plus d'hypothèses d'écart en fréquence dans le même temps et choisir la meilleure des hypothèses avec la même ressource matérielle (en l'utilisant plusieurs fois dans une période temporelle identique).

Les différentes hypothèses fréquentielles sont réalisées avec « resource sharing » (ressources partagées). Quand le débit diminue, le nombre d'hypothèses peut grandir, permettant une plage d'erreur de fréquence constante (grâce à l'augmentation du nombre d'hypothèses), et une bande de boucle constante (en nombre de symbole et donc en quantité d'information).

Une mise en oeuvre de type logiciel est par exemple la suivante :

Pour k {tous les symboles}
   Pour dF {toutes les hypothèses fréquentielles}

$$X[k]+i.Y[k] = (cos(i.Psi[k])+i.sin(i.Psi[k]))*(x[k]+i.y[k]) \ ;$$

$$Xd[k]+i.Yd[k] = \text{décision}(X[k]+i.Y[k])$$

$$dPhi[k,dF] = phase(\ Xd[k]+i.Yd[k] - (X[k]+i.Y[k])\ )$$

$$Psi[k+1,dF] = Psi[k,dF] + G.\ F(X[k],Y[k]).dPhi[k,dF] + dF$$

$$SNR[k+1,dF] = SNR[k,dF] + \|X[k]+i.Y[k]-Xd[k]-i.Yd[k]\|^2$$

   Fin boucle fréquence
   Fin boucle symbole

ici la lettre i désigne le nombre complexe (0,1) et non pas l'hypothèse courante d'écart en fréquence dF.

Dans cette mise en oeuvre, le signal entrant à l'instant k est noté x[k] +i.y[k], le signal corrigé de l'erreur de phase est X[k]+i.Y[k], la fonction décision retourne le point de la constellation décidé, la fonction phase(x+iy) retourne la phase du nombre complexe x+i.y, la fonction F est la fonction de pondération choisie, et l'estimation de la qualité est effectuée de manière itérative afin d'éviter la mise en mémoire des variables intermédiaires.

Il convient donc d'être capable de gérer 2N+1 états du NCO (Psi[k,dF]) et les états de SNR. Le calcul final de Psi[N,dF]-Psi[0,dF] donne une estimation fine de l'erreur résiduelle de phase. Le stockage des résultats intermédiaires pour chaque valeur de dF: (X,Y), (Xd,Yd), dPhi[k,dF], Psi[k,dF], SNR[k,dF] n'est pas obligatoire, une dernière hypothèse pour la valeur de la fréquence (après le choix du gagnant) permettant de recalculer toutes ces valeurs, pour l'hypothèse corrigée de l'erreur résiduelle. Ceci exige simplement de stocker un burst supplémentaire d'échantillons, et d'être capable de travailler sur deux bursts distincts simultanément. On peut en plus imaginer raffiner la valeur de la fréquence en prenant la valeur de la phase résiduelle sur la totalité du burst et compléter la correction de fréquence de l'hypothèse retenue de manière à annuler cette erreur résiduelle.

Dans un système utilisant un code en bloc adapté au burst, on peut envisager que le critère de décision ultime soit le taux d'erreur en sortie du décodeur 7 (figure 3). Dans ce cas il est nécessaire de décoder les sorties des N hypothèses testées, ce qui augmente fortement la puissance de calcul nécessaire. Dans ce cas, la métrique finale du décodeur est utilisée (on suppose ici un "soft-decodeur" en fin de bloc). Ceci remplace le calcul du SNR échantillon par échantillon.

Le critère de décision peut être un indicateur de qualité provenant du décodeur. L'indicateur de qualité est par exemple un indicateur de vitesse de convergence de l'algorithme de décodage, un mot de contrôle de cohérence (CRC = Cyclic Redundancy Chek) ou tout autre moyen offert par le codeur (non décodage pour un code de REED SOLOMON, appréciation du taux d'erreur en entrée du décodeur,...).

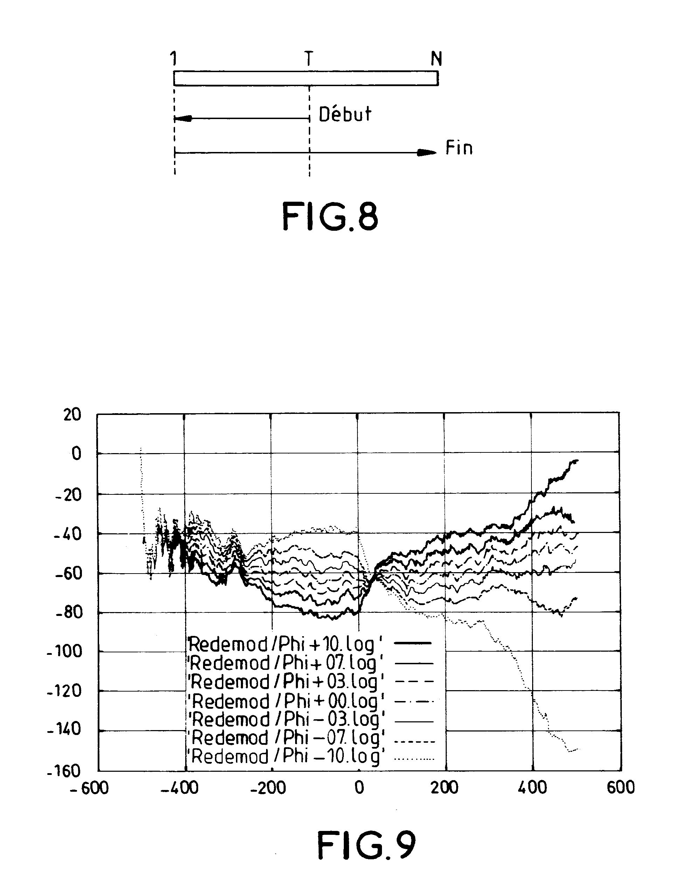

En pratique, pour pouvoir garantir la convergence de la boucle de phase en fin de burst dans le cas de bursts de très courte durée, il est intéressant d'initialiser la boucle en remontant l'axe du temps depuis un point pris suffisamment loin du début du burst. Cette façon de procéder est détaillée sur la figure 8.

On suppose que le burst contient N symboles. On initialise la boucle au niveau du symbole numéro T, on injecte dans la boucle les symboles en remontant le temps jusqu'au premier. On traite ensuite le burst dans le sens normal en inversant bien sûr le signe de la fréquence dans le NCO (12) de génération de la phase de correction. Cette façon de faire permet de traiter des bursts petits (en prenant par exemple T=N), et des bursts très longs (T<<N). Dans ce dernier cas on ne pénalise pas trop la puissance de calcul en limitant la valeur de T au strict nécessaire.

Un exemple de trajectoire de la phase est donné sur la figure 9.

On voit ici l'effet de la correction de phase en fonction des hypothèses prises en compte (7 hypothèses ici). La phase de départ à gauche est prise égale à zéro au point T (ici T=N=512 symboles). On voit sur cette figure que l'hypothèse de phase Phi-03 (qui correspond dans ce calcul à un écart de fréquence relatif de $\Delta F.Ts = 3 \ 10^{-4}$) est celle qui minimise l'erreur résiduelle de phase entre le premier et le dernier point du burst.

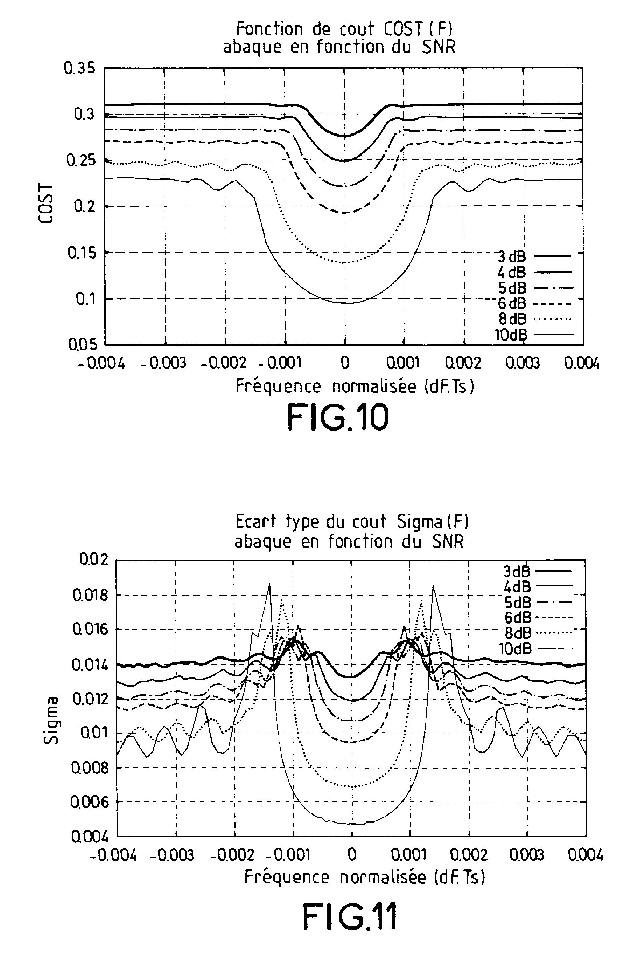

L'utilisation de la fonction représentée à la figure 7, donne comme SNR en fin de palier les courbes de la figure 10. Cette figure montre la valeur du SNR moyen en fonction de l'hypothèse d'écart en fréquence normalisé (abscisse) et du SNR vrai (7 courbes pour des SNR de valeur 3 à 10 dB).

Les hypothèses pour établir cette figure ont été les suivantes :

- gain de boucle G = 1/30
- préambule 16 symboles, data 378 symboles

L'écart type sur le SNR moyen en fin de palier est donné sur la figure 10.

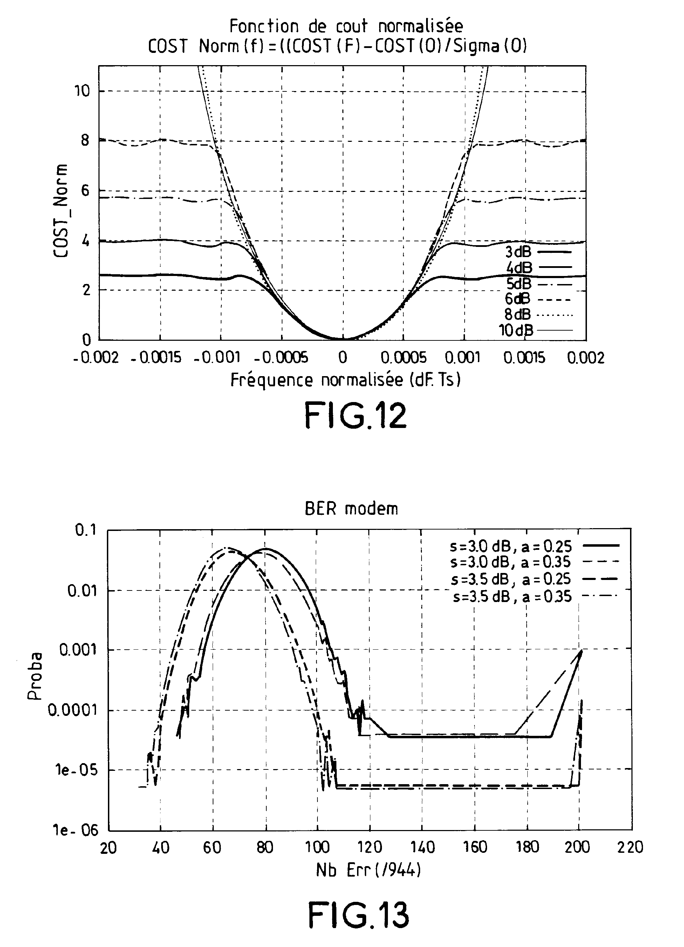

Pour terminer, la fonction de coût une fois normalisée (correction par sa valeur minimale et multiplication par l'écart type), est donnée sur la figure 12.

Cette figure peut être interprétée comme donnant la plage d'écart en fréquence de fonctionnement du procédé. En effet, la partie horizontale des courbes donne pour une valeur de SNR donnée, le risque de décrochage du modem (en valeur normalisé, ceci est équivalent à l'écart à la moyenne de la variable aléatoire SNR et est lié à la probabilité de décrochage).

L'histogramme des erreurs qui en résulte est donné sur la figure 13.

Les conditions de simulations associées sont :

- QPSK
- Paquet de 484 symboles, formé d'un "UW" de 12 symboles suivi d'un paquet de données de symboles (soit 944 bits utiles)
- roll off 0.25 et 0.35
- Recherche sur dF.TS=+/-$10^{-3}$
- 7 hypothèses au pas de $3.10^{-4}$
- C/N= 3.0 dB et 3.5dB
- boucle sur environ 60 symboles

En prenant une recherche réduite (recherche sur dF.TS=+/-$5.10^{-4}$) avec 3 hypothèses au pas de $3.10^{-4}$ et une boucle sur environ 90 symboles, on parvient à ne plus avoir de saut de phase à un C/N de 3.5dB (rien sur 200000 bursts), de même avec un C/N de " Db (rien sur 30000 bursts).

## Revendications

**1.** Procédé pour démoduler un signal dans un système de communications par paquet, le signal comportant au moins un burst représentatif des échantillons de données relatives à un ou plusieurs utilisateurs **caractérisé en ce qu'**il comporte au moins une étape d'estimation et de poursuite de la phase pendant au moins la durée du burst en utilisant un test d'hypothèse de fréquence.

2. Procédé selon la revendication 1 **caractérisé en ce qu'**il comporte au moins les étapes suivantes :

   1. pour un échantillon k du signal reçu,
   2. générer un signal de correction et de poursuite Scp(i) en utilisant une valeur d'écart de fréquence i$\Delta$F et une valeur de phase d$\varphi$,
   3. corriger le signal d'entrée Dk en le multipliant par le signal de correction Scp(i),
   4. transmettre le signal corrigé en fréquence et en phase,
   5. à une étape de décision, et
   6. à une étape de calcul de la phase résiduelle d$\varphi$,
   7. utiliser le signal décidé et le signal corrigé pour estimer la valeur SNR(i) pour l'écart de fréquence indicé i,
   8. intégrer la valeur de la phase résiduelle d$\varphi$ et la transmettre à l'étape 2 de génération de signal de correction et de poursuite,
   9. faire varier la valeur de i, réitérer les étapes 1 à 8,
   10. pour chaque hypothèse faire la somme de SNR locaux par échantillon,
   11. faire varier la valeur de k, réitérer les étapes 1 à 9,
   12. extraire la valeur en fréquence indice i pour laquelle la valeur du SNR est optimale.

3. Procédé selon la revendication 2 **caractérisé en ce que** la valeur du SNR est obtenue en minimisant l'expression suivante :

$$SNR = \sum_k |Rk\text{-}Dk|^2.$$

4. Procédé selon la revendication 2 **caractérisé en ce que** la valeur de phase est réinjecté dans la boucle, vers l'étape 2 de génération de signal de correction et de poursuite sous la forme :

$$\psi_{\kappa+1} = \psi_k + G \cdot F(\phi_k, \rho_k) \cdot d\varphi_k + dF$$

où $F(\phi,\rho)$ est la fonction de pondération.

5. Procédé selon la revendication 2 **caractérisé en ce que** l'on exécute l'étape 12 de manière itérative.

6. Procédé selon la revendication 2 **caractérisé en ce que** l'on exécute les étapes 1 à 11 pour la fréquence optimale et l'on détermine la valeur résiduelle de phase correspondante.

7. Procédé selon la revendication 6 **caractérisé en ce que** l'on introduit un retard dans le signal, échantillon par échantillon et on applique le signal corrigé en phase et en fréquence obtenu pour la valeur de fréquence optimale.

8. Procédé selon la revendication 2 **caractérisé en ce que** le signal corrigé en phase et en fréquence issu de l'étape 6 est transmis à une étape de décodage avant d'estimer la valeur du SNR sur les symboles décodés.

9. Procédé selon la revendication 2 à 8 **caractérisé en ce que** le critère de décision est un indicateur de qualité provenant du décodeur.

10. Procédé selon la revendication 9 **caractérisé en ce que** l'indicateur de qualité est un indicateur de vitesse de convergence de l'algorithme de décodage, un mot de contrôle de cohérence (CRC=Cyclic Redundancy Check) ou tout autre moyen offert par le codeur (non décodage pour un code de REED SOLOMON, appéciation du taux d'erreur en entrée du décodeur,...).

11. Dispositif pour démoduler un signal dans un système de communications par paquet, le signal comportant au moins un burst représentatif des échantillons de données relatives à un ou plusieurs utilisateurs **caractérisé en ce qu'**il comporte des moyens pour mettre en oeuvre le procédé selon l'une des revendications 1 à 10.

## FIG.1

| Synchronisation trame | User1 | User 2 | ••• | User N |
|---|---|---|---|---|

## FIG.2

| UW | User Data | UW1 | User Data | UW2 | User Data 1 | UW | User Data 2 |
|---|---|---|---|---|---|---|---|

Préambule   Préambule et Endambule   Mid-ambule

## FIG.3

Traitement de l'hypothèse i.ΔF

FIG.4a

FIG.4b

Point de la constellation
○ Dk = [+1, +1]

● Signal reçu [$x_k$+i.$y_k$]

FIG.5

FIG.6

Fonction de pondération de la phase

FIG.7

FIG.8

'Redemod /Phi +10.log'
'Redemod /Phi + 07.log'
'Redemod /Phi + 03.log'
'Redemod /Phi + 00.log'
'Redemod /Phi − 03.log'
'Redemod /Phi − 07. log'
'Redemod /Phi − 10.log'

FIG.9

Fonction de cout COST (F)
abaque en fonction du SNR

FIG.10

Ecart type du cout Sigma (F)
abaque en fonction du SNR

FIG.11

Fonction de cout normalisée
COST Norm(f)=((COST(F)−COST(0)/Sigma(0)

FIG.12

BER modem

FIG.13

**Office européen des brevets**

## RAPPORT DE RECHERCHE EUROPEENNE

Numéro de la demande

EP 03 10 4115

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | WO 00 30312 A (ERICSSON) 25 mai 2000 (2000-05-25) * abrégé * --- | 1-11 | H04L27/38 |
| X | WO 02 09382 A (PHILIPS ELECTRONICS) 31 janvier 2002 (2002-01-31) * abrégé * * page 2, ligne 28 - ligne 30 * * page 3, ligne 4 - ligne 17 * --- | 1-11 | |
| A | WO 01 54287 A (INFINEON) 26 juillet 2001 (2001-07-26) * page 2, ligne 22 - ligne 33 * --- | 1,11 | |
| X,P | EP 1 313 281 A (COM RESEARCH) 21 mai 2003 (2003-05-21) * le document en entier * ----- | 1,11 | |

DOMAINES TECHNIQUES RECHERCHES (Int.Cl.7)

H04L

Le présent rapport a été établi pour toutes les revendications

| Lieu de la recherche | Date d'achèvement de la recherche | Examinateur |
|---|---|---|
| LA HAYE | 12 mars 2004 | Scriven, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 1 418 724 A1**

## ANNEXE AU RAPPORT DE RECHERCHE EUROPEENNE
## RELATIF A LA DEMANDE DE BREVET EUROPEEN NO.

EP 03 10 4115

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-03-2004

| Document brevet cité au rapport de recherche | | Date de publication | Membre(s) de la famille de brevet(s) | | Date de publication |
|---|---|---|---|---|---|
| WO 0030312 | A | 25-05-2000 | US | 6519300 B1 | 11-02-2003 |
| | | | AU | 1127500 A | 05-06-2000 |
| | | | CN | 1326632 T | 12-12-2001 |
| | | | DE | 19983716 T0 | 14-02-2002 |
| | | | JP | 2002530938 T | 17-09-2002 |
| | | | WO | 0030312 A1 | 25-05-2000 |
| WO 0209382 | A | 31-01-2002 | CN | 1386354 T | 18-12-2002 |
| | | | WO | 0209382 A1 | 31-01-2002 |
| | | | EP | 1249115 A1 | 16-10-2002 |
| | | | US | 2002034265 A1 | 21-03-2002 |
| WO 0154287 | A | 26-07-2001 | DE | 10001854 A1 | 02-08-2001 |
| | | | CN | 1395762 T | 05-02-2003 |
| | | | WO | 0154287 A2 | 26-07-2001 |
| | | | EP | 1249079 A2 | 16-10-2002 |
| | | | JP | 2003520548 T | 02-07-2003 |
| | | | US | 2003012268 A1 | 16-01-2003 |
| EP 1313281 | A | 21-05-2003 | EP | 1313281 A1 | 21-05-2003 |
| | | | WO | 03043282 A1 | 22-05-2003 |

EPO FORM P0460

Pour tout renseignement concernant cette annexe : voir Journal Officiel de l'Office européen des brevets, No.12/82

18